# EUROPÄISCHE PATENTSCHRIFT

(11) **EP 2 572 794 B1**
(45) Veröffentlichungstag und Bekanntmachung des Hinweises auf die Patenterteilung: **10.09.2014**
(21) Anmeldenummer: 12173453.7
(22) Anmeldetag: 25.06.2012
(51) Int. Cl.: B04B 7/18, B01D 29/11, B01D 29/23

(54) **Filtereinsatz**
Filter insert
Installation de filtre

(30) Priorität: 21.09.2011 DE 202011051390 U
(43) Veröffentlichungstag der Anmeldung: 27.03.2013
(73) Patentinhaber: Kögel, Jürgen, 67365 Schwegenheim (DE)
(72) Erfinder: Kögel, Jürgen, 67365 Schwegenheim (DE)
(74) Vertreter: Geitz Truckenmüller Lucht

(56) Entgegenhaltungen:
- EP-A1- 1 935 499
- EP-A1- 2 514 498
- WO-A1-2006/119835
- DE-A1- 19 828 321
- US-A- 4 545 833

## Beschreibung

Die vorliegende Erfindung betrifft einen Filtereinsatz, zur Verwendung in einer Zentrifugentrommel, umfassend ein Filtertuch, welchem zumindest abschnittsweise wenigstens ein Rastmittel zum Einführen in eine Montagenut der Zentrifugentrommel unlösbar zugeordnet ist.

Ein derartiger Filtereinsatz ist bereits aus der EP 1 935 499 A1 vorbekannt. Dort wird im Kantenbereich eines Filtereinsatzes ein Befestigungsring angeordnet, welcher von der Innenseite de Filtereinsatzes her diesen in eine Nut hineindrückt und damit festhält.
Insbesondere beim Betrieb von so genannten Schäl- und Pendelzentrifugen, welche in vertikaler und horizontaler Bauweise bekannt sind, werden schon seit langem Filtereinsätze verwendet. Diese bestanden bislang aus Filtertüchern, die in den Zentrifugentrommeln der oben genannten Zentrifugen eingesetzt und dann mit so genannten Stemmschnüren, also rechteckigen oder quadratischen Kordeln, in die den Zentrifugentrommeln zugeordneten Montagenuten mithilfe von Hämmern und Plastikmeißeln befestigt wurden. Dies gelingt dadurch, dass zunächst das Filtertuch über die Montagenut gelegt wird und dann die Stemmschnüre mithilfe von Hammer und Plastikmeißel in die Montagenut eingeschlagen werden.

Eine solche Montage ist sehr schwierig und erfordert geübtes Personal. Häufig gelingt nach diesem Verfahren das Einbringen der Filtertücher nur mit einem gewissen Versatz oder unter Bildung von Falten. Darüber hinaus liegt der durchschnittliche Zeitbedarf zum Einsatz eines derartigen, herkömmlichen Filters bei ca. ein bis zwei Stunden.

Die faltenfreie Tuchmontage ist aber Grundvoraussetzung dafür, dass das Filtertuch nicht beim Austragen des Filterkuchens durch das so genannte Schälmesser berührt und damit zerstört wird. Die Zerstörung des Filtertuches bedeutet für den Betreiber hohe Kosten, welche sich neben der Wiederbeschaffung des Filtertuchs aus Stillstandszeiten und einer erneuten erforderlichen Grundreinigung der Zentrifuge ergeben.

Vor diesem Hintergrund stellt sich die vorliegende Erfindung die Aufgabe, einen Filtereinsatz vorzuschlagen, welcher mit einem deutlich verringerten Zeitbedarf, in qualitativ hochwertiger Weise platziert werden kann.

Gelöst wird diese Aufgabe durch einen Filtereinsatz gemäß den Merkmalen des Anspruchs 1. Weitere, sinnvolle Ausgestaltungen eines solchen Filtereinsatzes können den Unteransprüchen entnommen werden.

Erfindungsgemäß ist vorgesehen, ein Filtertuch an seinen Außenkanten mit wenigstens einem Rastmittel zu versehen, welches unlösbar mit dem Filtertuch verbunden wird. Hierdurch wird es lediglich noch notwendig, dieses Rastmittel in die Montagenut der Zentrifugentrommel einzusetzen, beispielsweise einzuclipsen, um eine faltenfreie Montage des Filtereinsatzes zu gewährleisten. Durch ein rechtwinkliges, exaktes Aufschweißen von solchen Rastmitteln, beispielsweise in Form von runden oder quadratischen Kordeln, die an den Außenkanten des das Filtertuch bildenden Filtergewebes erfolgt, ist es ermöglicht, den Filtereinsatz bei einem Zeitaufwand von ca. 5 bis 10 Minuten faltenfrei zu montieren. Eine derartige Montage kann aufgrund der genannten Vereinfachungen dann auch durch ungeübtes Personal erfolgen. Speziell bei häufigem Produktwechsel werden die Personalkosten und die Stillstandszeiten und damit die Kosten des Betriebes deutlich reduziert.

Insbesondere ist vorgesehen, das Filtertuch als bandförmiges Tuch herzustellen, welches an beiden Längskanten derartige Rastmittel, insbesondere in Form von Quadratkordeln aufweist. Aufgrund der beidseitigen Befestigung in derartigen Montagenuten ist eine bessere Halterung des Filtereinsatzes in der Zentrifugentrommel gewährleistet, so dass ein ideales Ergebnis entsteht. Ein derartiger Filtereinsatz dichtet zudem an der Nut besser ab als die bisherige Methode mit einem eingestemmten Filtertuch, so dass eine Bypassströmung des Produktes um den Filtereinsatz herum deutlich vermindert werden kann. Dies führt zu einem gesenkten Verlust an dem hergestellten Produkt. Insbesondere bei der Herstellung von Pharmaprodukten stellt dies ebenfalls einen erheblichen Kostenfaktor dar.

Insbesondere bei runden oder auch bei rechteckigen Zentrifugentrommeln ist es besonders sinnvoll, das Filtertuch auf Stoß zu einem Endlosring zu verbinden, um die Nachteile einer Überlappung zu vermeiden. Im Falle einer Verbindung des Filtertuchs zu einem Endlosring werden die beiden verbundenen Enden im Bereich des Stoßes durch ein so genanntes Köperband verbunden, welches beispielsweise aus Polypropylen hergestellt sein kann. Auch hier erfolgt die Verbindung vorteilhafter Weise durch Schweißen.

Die vorstehend beschriebene Erfindung wird im Folgenden anhand eines Ausführungsbeispiels näher erläutert.

Es zeigen
- Figur 1: einen Filtereinsatz in einer perspektivischen Darstellung von schräg oben, sowie
- Figur 2: einen in eine Zentrifugentrommel einzusetzenden Filtereinsatz in einer Querschnittsdarstellung durch Filtereinsatz und Zentrifugentrommeln.

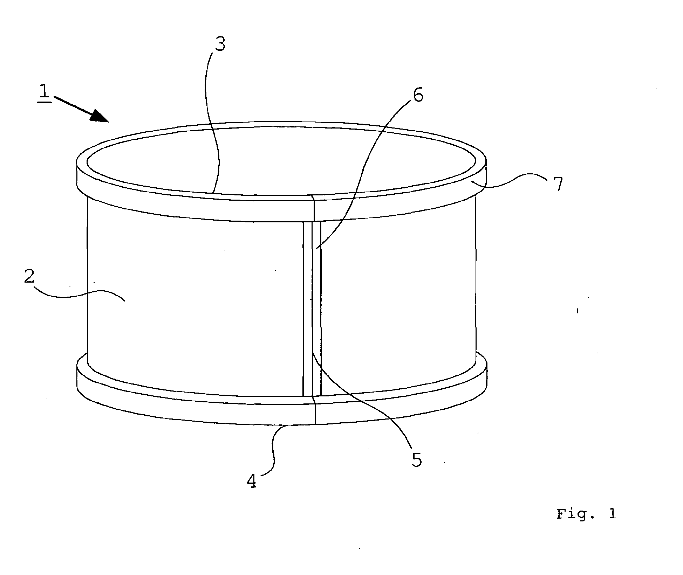

Figur 1 zeigt einen Filtereinsatz 1, welcher im Wesentlichen aus einem Filtertuch 2, das bei dem vorgestellten Filtereinsatz 1 in zylindrischer Form die Außenhülle darstellt, sowie zwei an der oberen Außenkante 3 sowie der unteren Außenkante 4 angebrachten Quadratkordeln 7 besteht. Die beiden Quadratkordeln 7 sind an den Außenkanten 3, 4 durch Schweißen mit dem Filtertuch 2 verbunden, so dass durch ein Einschieben der Quadratkordel 7 als Rastmittel in eine Montagenut einer Zentrifugentrommel eine faltenfreie Montage des Filtereinsatzes 1 ermöglicht wird. Hierbei ist im vorliegenden Fall der Filtereinsatz 1 in seiner Länge vorkonfektioniert, wobei die Enden des Filtertuchs 2 in einem Stoß 5 verbunden sind. Im Verbindungsbereich ist ein Köperband 6 angeordnet, mit dem die Verschweißung des Stoßes 5 des Filtertuchs 2 erfolgt.

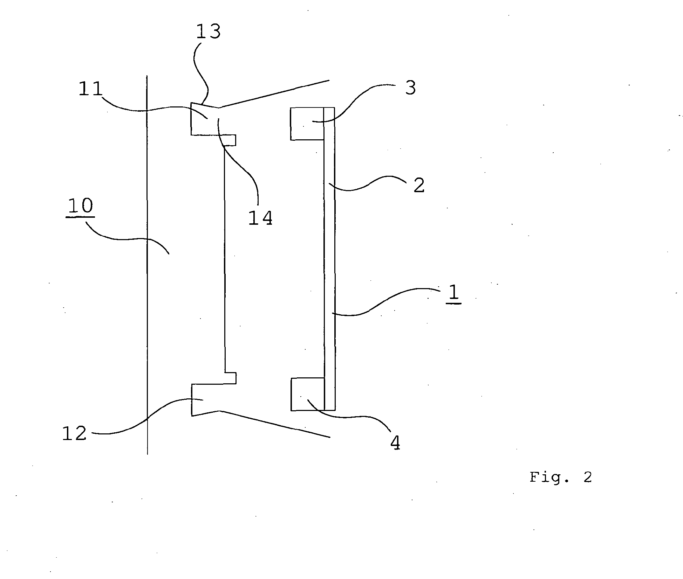

Figur 2 zeigt den in Figur 1 dargestellten Filtereinsatz 1, kurz vor der Montage in einer Zentrifugentrommel 10. Die Zentrifugentrommel 10 weist für die Montage des Filtereinsatzes 1 eine obere Montagenut 11 und eine untere Montagenut 12 auf. In diesen Montagenuten 11, 12 werden die Quadratkordeln 7, welche an der oberen Außenkante 3 und der unteren Außenkante 4 angeordnet sind, eingesteckt. Hierbei können aufgrund der Elastizität der Quadratkordeln 7 diese zunächst etwas zusammengedrückt werden, um durch die Öffnung 14 der jeweiligen Montagenut 11, 12 hindurchgeschoben werden zu können. Hinter der Öffnung 14 der jeweiligen Montagenut 11, 12 befindet sich eine Hinterschneidung 13, in welcher eine Dekompression der Quadratkordeln 7 vorgenommen werden kann. Hierdurch werden die Quadratkordeln 7 in der Hinterschneidung 13 der Montagenuten 11, 12 gehalten und im Ganzen das Filtertuch 2 des Filtereinsatzes 1 in seiner gewünschten Position gehalten.

Vorstehend beschrieben ist somit ein Filtereinsatz, welcher in sehr kurzer Zeit und auch von ungeübtem Personal in einer herkömmlichen Zentrifugentrommel montiert werden kann, indem mit dem Filtertuch 2 verbundene Rastmittel, insbesondere Quadratkordeln 7, in die ansonsten zum Einstemmen von Stemmschnüren vorgesehenen Montagenuten eingelegt werden.

### BEZUGSZEICHENLISTE

- 1: Filtereinsatz
- 2: Filtertuch
- 3: obere Außenkante
- 4: untere Außenkante
- 5: Stoß
- 6: Köperband
- 7: Quadratkordel
- 10: Zentrifugentrommel
- 11: obere Montagenut
- 12: untere Montagenut
- 13: Hinterschneidung
- 14: Öffnung

## Patentansprüche

1. Filtereinsatz, zur Verwendung in einer Zentrifugentrommel (10), umfassend ein Filtertuch (2), welchem zumindest abschnittsweise wenigstens ein Rastmittel unlösbar zugeordnet ist,
**dadurch gekennzeichnet, dass** als Rastmittel wenigstens eine Kordel zum Einführen in eine Montagenut (11, 12) der Zentrifugentrommel (10) verwendet wird, welche außenseitig entlang wenigstens einer Außenkante (3, 4) des auf Stoß zu einem Endlosring verbundenen Filtertuchs (2) aufgeschweißt ist.

2. Filtereinsatz gemäß Anspruch 1, **dadurch gekennzeichnet, dass** Rastmittel an einander gegenüberliegenden Außenkanten (3, 4) des Filtertuchs (2) angebracht sind.

3. Filtereinsatz gemäß einem der Ansprüche 1 oder 2, **dadurch gekennzeichnet, dass** das wenigstens eine Rastmittel elastisch ist und der Durchmesser des wenigstens einen Rastmittels größer ist als der Durchmesser einer Öffnung (14) der diesem Rastmittel zuzuordnenden Montagenut (11).

4. Filtereinsatz gemäß einem der vorhergehenden Ansprüche, **dadurch gekennzeichnet, dass** das Filtertuch (2) auf Stoß zu einem Endlosring verschweißt ist.

5. Filtereinsatz gemäß einem der vorhergehenden Ansprüche, **dadurch gekennzeichnet, dass** ein Verbindungselement auf den Stoß (5) aufgebracht ist.

6. Filtereinsatz gemäß Anspruch 5, **dadurch gekennzeichnet, dass** es sich bei dem Verbindungselement um ein Köperband (6) handelt, welches vorzugsweise aus Polypropylen hergestellt ist.

7. Filtereinsatz gemäß einem der vorhergehenden Ansprüche, **dadurch gekennzeichnet, dass** es sich bei der Kordel um eine Quadratkordel (7) handelt.

## Claims

1. A filter insert for use in a centrifugal drum (10), comprising a filter cloth (2), with at least one latching means being at least in sections associated to the filter cloth (2), **characterized in that** at least one cord for introduction into a mounting groove (11, 12) of the centrifugal drum (10) is used as the latching means, the cord being welded on the outside along at least one outer edge (3, 4) of the filter cloth (2) which is joint edge to edge into an endless ring.

2. A filter insert according to claim 1, **characterized in that** latching means are attached to mutually opposite outer edges (3, 4) of the filter cloth (2).

3. A filter insert according to one of the claims 1 or 2, **characterized in that** the at least one latching means is elastic and the diameter of the at least one latching means is greater than the diameter of an opening (14) of the mounting groove (11) to be associated with said latching means.

4. A filter insert according to one of the preceding claims, **characterized in that** the filter cloth (2) is welded as a weld joint into an endless ring.

5. A filter insert according to one of the preceding claims, **characterized in that** a connecting element (5) is applied to the weld joint (5).

6. A filter insert according to claim 5, **characterized in that** the connecting element concerns a twilled tape (6) which is preferably made of polypropylene.

7. A filter insert according to one of the preceding claims, **characterized in that** the cord concerns a square cord (7).

## Revendications

1. Insert de filtre destiné à une utilisation dans un tambour de centrifugeuse (10), comprenant une toile de filtre (2) à laquelle au moins un moyen d'enclenchement est associé au moins par sections de façon inamovible, **caractérisé en ce que** le moyen d'enclenchement utilisé est au moins un cordon à insérer dans une gorge de montage (11, 12) du tambour de centrifugeuse (10), qui est soudé sur l'extérieur le long d'au moins un bord extérieur (3, 4) de la toile de filtre (2) assemblée bout à bout pour former un anneau sans fin.

2. Insert de filtre selon la revendication 1, **caractérisé en ce que** des moyens d'enclenchement sont appliqués sur des bords extérieurs (3, 4) de la toile de filtre (2) qui se font face.

3. Insert de filtre selon l'une des revendications 1 ou 2, **caractérisé en ce que** l'au moins un moyen d'enclenchement est élastique et le diamètre de l'au moins un moyen d'enclenchement est plus grand que celui d'une ouverture (14) de la gorge de montage (11) associée à ce moyen d'enclenchement.

4. Insert de filtre selon l'une des revendications précédentes, **caractérisé en ce que** la toile de filtre (2) est soudée bout à bout pour former un anneau sans fin.

5. Insert de filtre selon l'une des revendications précédentes, **caractérisé en ce qu'**un élément de liaison est appliqué sur le joint (5).

6. Insert de filtre selon la revendication 5, **caractérisé en ce que** l'élément de liaison est une sangle (6) fabriquée de préférence en polypropylène.

7. Insert de filtre selon l'une des revendications précédentes, **caractérisé en ce que** le cordon est un cordon carré (7).
